# EUROPÄISCHE PATENTSCHRIFT

(11) **EP 1 243 394 B1**
(45) Veröffentlichungstag und Bekanntmachung des Hinweises auf die Patenterteilung: **25.05.2005**
(21) Anmeldenummer: 02006239.4
(22) Anmeldetag: 20.03.2002
(51) Int. Cl.: B29C 45/17

(54) **Verfahren zur Herstellung von Kunststoffformteilen mit einem Hohlraum nach dem Spritzgiessverfahren und Vorrichtung dafür**
Process for manufacturing of injection moulded products with a hollow section by injection moulding and apparatus thereof
Technique de moulage par injection de pièces en matière plastique présentant une partie creuse et appareil de moulage

(30) Priorität: 23.03.2001 DE 10114414
(43) Veröffentlichungstag der Anmeldung: 25.09.2002
(73) Patentinhaber: Battenfeld GmbH, D-58540 Meinerzhagen (DE)
(72) Erfinder: Eckardt, Helmut, Dipl.-Ing., 58540 Meinerzhagen (DE); Schwesinger, Rolf, 58540 Meinerzhagen (DE); van der Steen, Stephan, Dipl.-Ing., 57489 Drolshagen-Schürrholz (DE); Wülfrath, Marc, Dipl.-Ing., 58566 Kierspe (DE); Bielich, Norbert, Dipl.-Ing. FH, 57223 Kreuztal (DE)

(56) Entgegenhaltungen:
- DE-U- 9 316 984
- US-A- 5 198 240
- MICHAELI W ET AL: "KUEHLZEIT REDUZIEREN MIT DER WASSER-INJEKTIONSTECHNIK WORTEILE GEGENUEBER DER GASINJEKTION" , KUNSTSTOFFE, CARL HANSER VERLAG. MUNCHEN, DE, VOL. 90, NR. 8, PAGE(S) 67-72 XP000963683 ISSN: 0023-5563 * Seite 68, Absatz 1 *

## Beschreibung

Die Erfindung betrifft eine Vorrichtung zum Spritzgießen von mindestens einen Hohlraum aufweisenden Formteilen aus Kunststoffmaterial, die aufweist:
- Mittel zum Einspritzen von Kunststoffschmelze entlang eines Schmelzefließweges in die Kavität eines Spritzgießwerkzeugs und
- Mittel zum Einspritzen eines Fluids in das noch schmelzflüssige Kunststoffmaterial,
- wobei die Mittel zum Einspritzen eines Fluids ausgelegt sind, um eine Flüssigkeit mit vorgegebenem Druck und vorgegebener Menge einzuspritzen.

Des weiteren betrifft die Erfindung ein dazu gehöriges Verfahren.

Eine gattungsgemäße Vorrichtung ist aus US-A-5 198 240 und **KU *Kunststoffe*** (1999) bekannt, wo in einem Artikel des IKV-Aachens "Gas geben mit Wasser" eine Vorrichtung beschrieben wird, bei der eine oder mehrere Hydropumpen das Wasser in die fließfähige Schmelze injizieren und einen Hohlraum erzeugen. Anschließend durchströmt das Wasser den so geschaffenen Hohlraum. Dabei ist vorgesehen, das Wasser im Kreislauf fahren zu können. Nachteilig bei dieser Ausgestaltung der Vorrichtung ist die direkte Integration der Wasserinjektionsvorrichtung am Spritzgießwerkzeug.

Der Erfindung liegt daher die **Aufgabe** zugrunde, eine bekannte Vorrichtung der Art weiterzuentwickeln, dass die Fluideinspritzvorrichtung mehrere Spritzgießwerkzeuge bzw. Spritzgießmaschinen bedienen kann.

Die Aufgabe ist durch die Merkmale des Vorrichtungsanspruchs 1 und des Verfahrensanspruchs 12 gelöst. Die Mittel zum Einspritzen einer Flüssigkeit bestehen aus einem ersten Teilelement, das zentral und entfernt vom Spritzgießwerkzeug angeordnet ist, und aus einer Anzahl zweiter Teilelemente die in unmittelbarer Nähe des Spritzgießwerkzeuges angeordnet sind, sowie einer Anzahl dritter Teilelemente, die jeweils an einem Spritzgießwerkzeug lokal angeordnet sind. Das erste oder die zweiten Teilelemente werden üder eine Versorgungsleitung mit Fluid versorgt, wobei über eine Pumpe als Mittel zur Druckerhöhung das oder die Reservoirs mit Flüssigkeit gespeist werden.

Durch diese Anordnung wird es möglich, die erforderliche Menge einer Flüssigkeit mit ausreichendem Druck in einem ersten Teilelement bereitzustellen. Die eigentliche Regelung und Eingabe der Flüssigkeit erfolgt über die Teilelemente zwei und drei.

Bei Versuchen hat sich gezeigt, dass es günstig ist, das erste Teilelement als ein Reservoir für Flüssigkeiten auszugestalten. Es ist aber auch denkbar, das erste Teilelement aus einer Versorgungsleitung für Flüssigkeit, vorzugsweise vom Wasserversorgungsbetrieb, auszuführen, wenn die Druckerhöhung im zweiten Teilelement erfolgt.

Gute Ergebnisse können auch erzielt werden, wenn die Flüssigkeit temperiert wird. Hierzu ist vorgesehen, das erste Teilelement aus mindestens einem Reservoir für Flüssigkeit und einer Ringleitung zu fertigen.

Weiterbildungsgemäß ist das erste Teilelement aus mindestens einem ersten Reservoir für Flüssigkeit und einem zweiten Reservoir für Druckgas, vorzugsweise Stickstoff, zusammengesetzt. Es können aber auch zwei Reservoirs für Flüssigkeiten sein, wobei diese unterschiedliche Flüssigkeitstemperaturen aufweisen. Das erste Teilelement, egal in welcher Ausführung, ist mit geeigneten Mitteln zur Druckerhöhung der Flüssigkeit ausgestattet.

Die zweiten Teilelemente sind beispielsweise Einrichtungen zur Steuerung und/oder Regelung des Fluiddruckes und die dritten Teilelemente Fluideinspritzelemente Vorteilhafterweise sind die zweiten Teilelemente mindestens Druckregelmodule. Es kann aber auch zusätzlich ein Speicher integriert werden, so dass die Einrichtungen zur Steuerung und/oder Regelung des Fluiddruckes aus einem Druckregelmodul und einem Flüssigkeitsspeicher oder einem kombinierten Flüssigkeits- / Gasspeicher bestehen. Der gesamten Einrichtung zur Steuerung und/oder Regelung des Fluiddruckes kann eine Pumpe als Mittel zur Druckerhöhung vorgeschaltet werden, um ausreichenden Druck und Menge an Flüssigkeit bereitzustellen. Dies ist besonders vorteilhaft, wenn als erstes Teilelement kein Reservoir vorgesehen ist.

Um die Flüssigkeit auf eine gewünschte Temperatur zu bringen, kann das erste Teilelement und/oder die zweiten Teilelemente Temperierungsmittel aufweisen. Diese können beispielsweise am Eingang und/oder am Ausgang der zweiten Teilelemente angeordnet sein, aber auch in den Bauteilen des ersten Teilelementes integriert sein.

Zwischen den mindestens zwei Flüssigkeitsreservoirs und dem jeweiligen Spritzgießwerkzeug ist mindestens eine Mischarmatur angeordnet, mit der die in das Spritzgießwerkzeug einzuspritzende Flüssigkeit auf eine gewünschte Temperatur gemischt wird.

Das vorgeschlagene Verfahren zum Spritzgießen von mindestens einen Hohlraum aufweisenden Formteilen aus Kunststoffmaterial weist die folgenden Schritte auf:
a) Einspritzen von Kunststoffschmelze von einer Einspritzeinheit entlang eines Schmelzefließweges in die Kavität einer Anzahl Spritzgießwerkzeuge;
b) Einspritzen einer Flüssigkeit in das noch schmelzflüssige Kunststoffmaterial, so dass dieses an die Wandungen der Kavität gepreßt wird;
c) Verfestigenlassen des Kunststoffmaterials, bis dieses selbsttragend das Formteil bildet;
d) Entformen des Formteils aus der Kavität des Spritzgießwerkzeugs;
wobei als Flüssigkeit eine Flüssigkeit eingesetzt wird, die mit vorgegebenem Druck und vorgegebener Menge eingespritzt wird.

Es ist dabei vorgesehen, dass die Flüssigkeit von einem ersten Teilelement der Mittel zum Einspritzen der Flüssigkeit, das zentral angeordnet ist, über eine Anzahl zweiter Teilelemente der Mittel zum Einspritzen der Flüssigkeit, die in der Nähe der Spritzgießwerkzeuge angeordnet sind, zu einer Anzahl dritter Teilelemente der Mittel zum Einspritzen der Flüssigkeit, die jeweils lokal an einem Spritzgießwerkzeug angeordnet sind, geleitet wird und von diesem in die Kunststoffschmelze eingespritzt wird.

In der Zeichnung sind mehrere Ausführungsvarianten der erfindungsgemäßen Vorrichtung dargestellt.
- Fig. 1: zeigt schematisch die Anordnung der drei Teilelemente mit einem Reservoir und Druckregelungsmodul,
- Fig. 2: entspricht Figur 1 mit zusätzlichem Flüssigkeitsspeicher sowie Temperierung und alternativer Werkzeuganbindung,
- Fig. 3: entspricht Figur 1 ohne Reservoir, jedoch mit der Druckregelung vorgeschalteter Druckerhöhung, Speicher und alternativer Flüssigkeitsleitung,
- Fig. 4: entspricht Figur 1 mit einer Ringleitung und Werkzeuganbindung gemäß Figur 2,
- Fig. 5: entspricht Figur 1 mit zwei Flüssigkeitsreservoirs,
- Fig. 6: entspricht Figur 1 und Figur 5, jedoch mit einem Druckgasreservoir,
- Fig. 7: zeigt eine weitere Alternative zur Werkzeuganbindung, und
- Fig. 8: zeigt ein Beispiel einer Schaltungsanordnung gemäß Figur 6

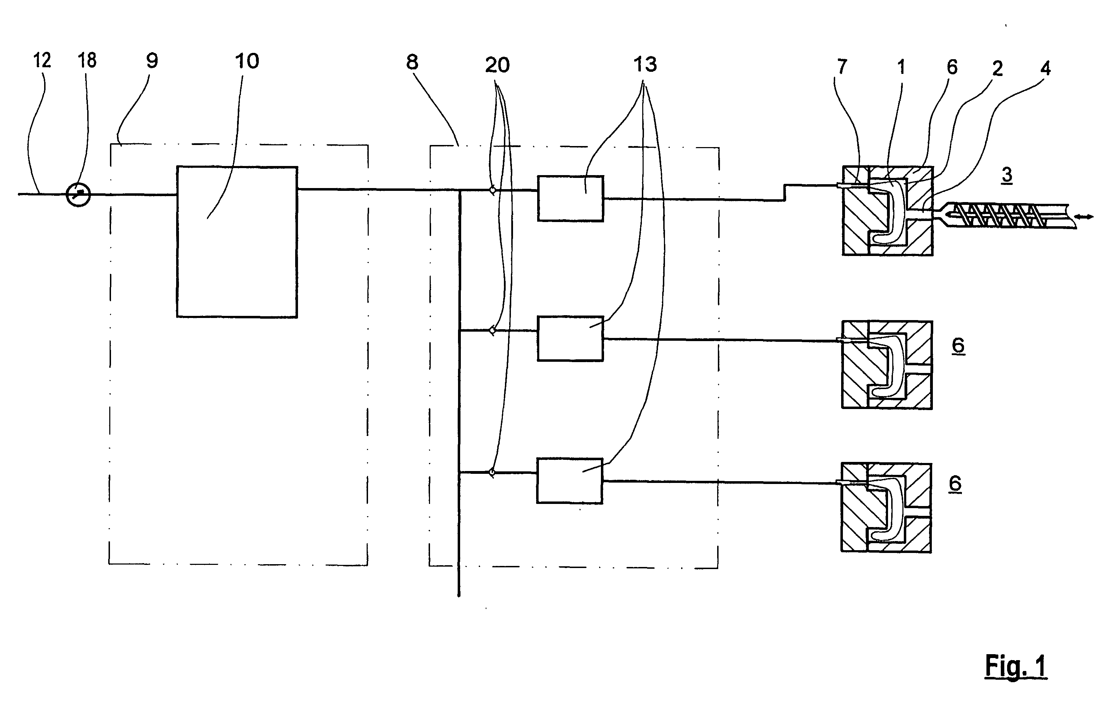

Figur 1 zeigt schematisch eine Spritzeinheit 3, über die entlang eines Schmelzefließweges 4 Kunststoffschmelze in ein Spritzgießwerkzeug 6 eingespritzt wird. Weitere Spritzgießwerkzeuge 6 sind nur angedeutet, wobei die jeweils zugehörige Spritzeinheit 3 nicht dargestellt ist. Über ein Flüssigkeitsreservoir 10, das als erstes Teilelement 9 dient und mit einer Versorgungsleitung 12 und einer Pumpe 18 in Verbindung steht, wird Flüssigkeit entlang eines zweiten Teilelementes 8, das hier aus einem Druckregelmodul 13 besteht, über eine Fluideinspritzdüse 7, als drittes Teilelement, in die Kunststoffschmelze injiziert, um den Hohlraum 1 im Formteil 2 zu bilden.

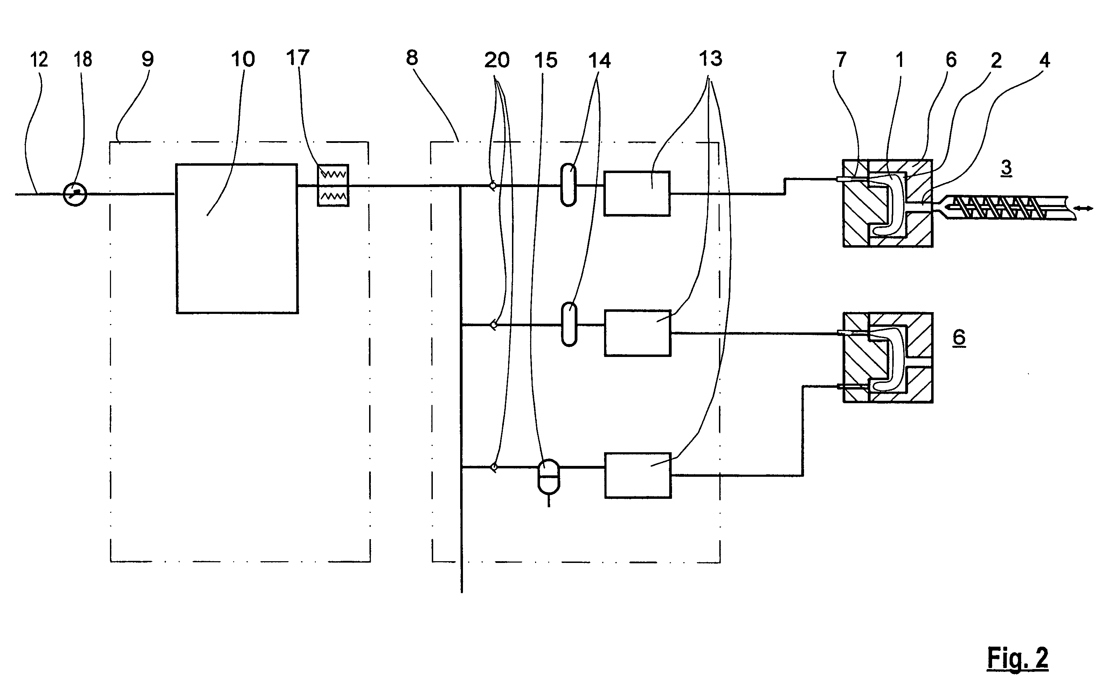

Figur 2 zeigt eine alternative Ausführung der Vorrichtung. Im zweiten Teilelement 8 ist ein Speicher integriert, wobei hier ein reiner Flüssigkeitsspeicher 14 oder wie im unteren Teil der Figur gezeigt, ein kombinierter Flüssigkeits- / Gasspeicher 15 eingesetzt werden kann. Es ist somit möglich, den Flüssigkeitsdruck zusätzlich zu beeinflussen. Auch eine große Menge Flüssigkeit kann über die Speicher bereitgestellt werden, auch wenn der Nachschub über das erste Teilelement 9 beispielsweise unterbrochen ist. Ein Druckabfall wird über den kombinierten Flüssigkeits- / Gasspeicher 15 vermieden, da der Druck der Flüssigkeit über das Gaspolster konstant gehalten wird. Weiterhin zeigt die Figur 2 eine Variante, bei der zwei Hohlräume 1 in einem Spritzgießwerkzeug 6 versorgt werden.

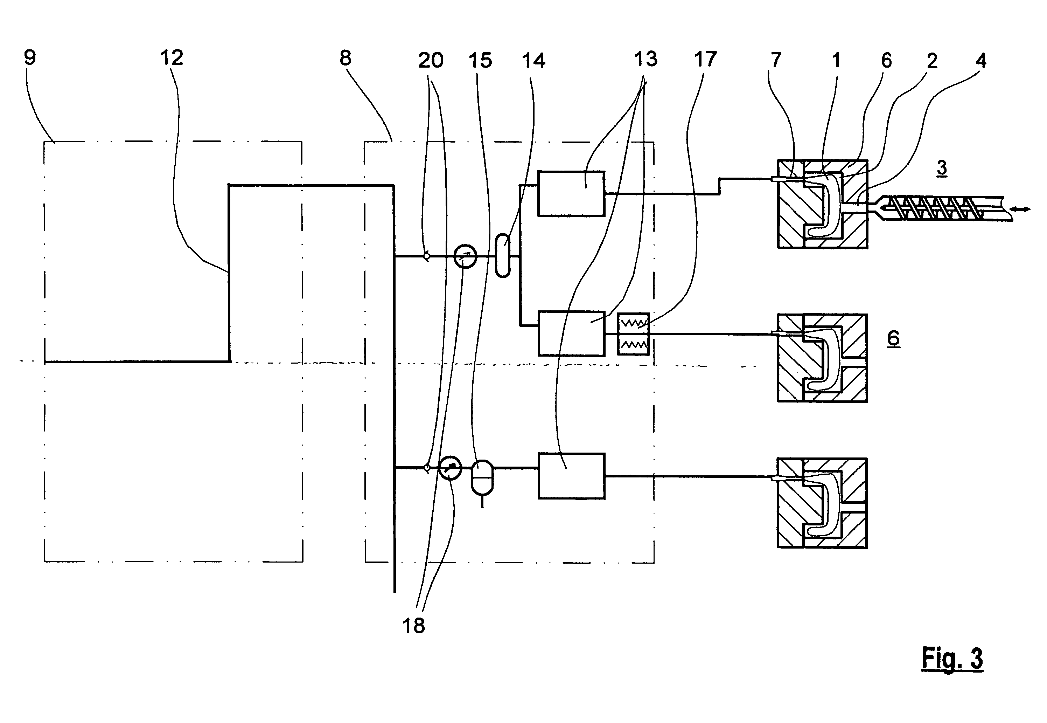

Die Ausgestaltung der Vorrichtung nach Figur 3 nutzt den Flüssigkeitsdruck, wie er von den Versorgungsbetrieben bereitgestellt wird. Um den Flüssigkeitsdruck beeinflussen zu können, ist im zweiten Teilelement 8 neben den Speichermöglichkeiten gemäß Figur 2 jedem Regelstrang gleichen Druckes eine Einrichtung zur Druckerhöhung, hier eine Pumpe 18, vorgeschaltet. Hierbei wird davon ausgegangen, dass im oberen und mittleren Regelstrang der gleiche Druck benötigt wird, so dass ein Speicher 14 und eine Pumpe 18 zwei Druckregelungsmodule 13 versorgt. Beispielhaft für eine Möglichkeit der Temperierung ist am Ende des mittleren Regelstranges ein Temperierungsmittel 17 dargestellt.

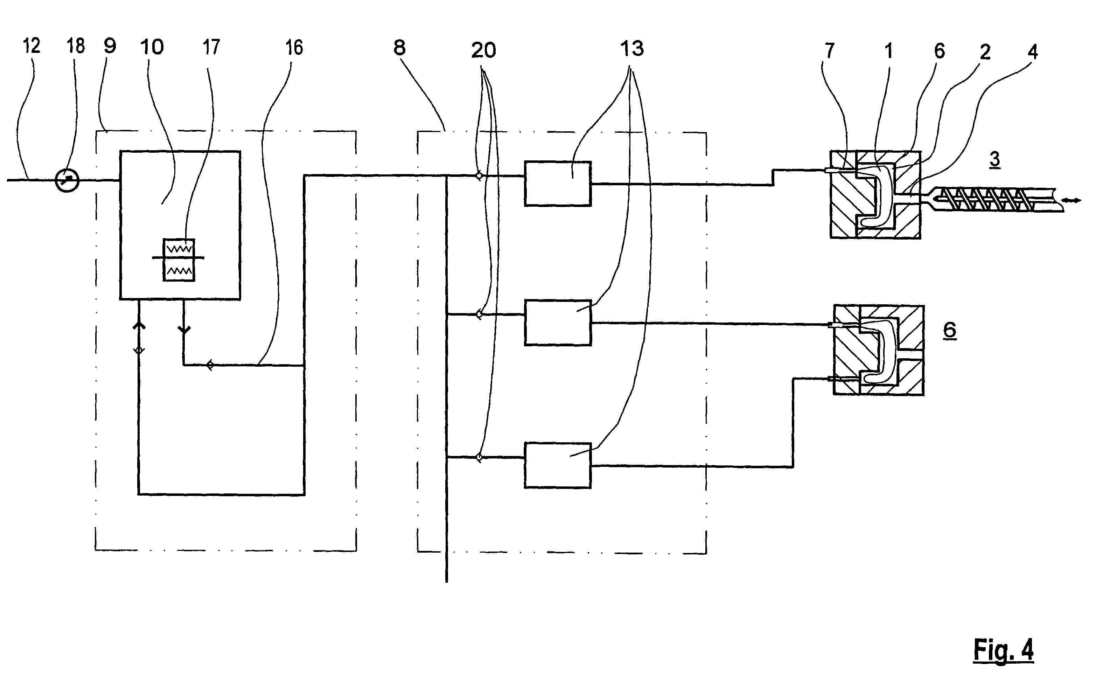

Ist die Temperierung 17 im ersten Teilelement 9 untergebracht, wie in Figur 4 gezeigt, bietet es sich an, die temperierte Flüssigkeit in einer Ringleitung 16 umlaufen zu lassen, um ein Abkühlen oder Erwärmen zu verhindern. Es ist aber auch denkbar, die Temperierungsmittel 17 jedem Regelstrang im zweiten Teilelement 8 vorzuschalten, um unterschiedliche Temperaturen der Flüssigkeit je Werkzeug 6 oder Hohlraum 1 bereitzustellen. Die alternative Werkzeuganbindung der Regelstränge gemäß Figur 2 ist hier ebenfalls möglich.

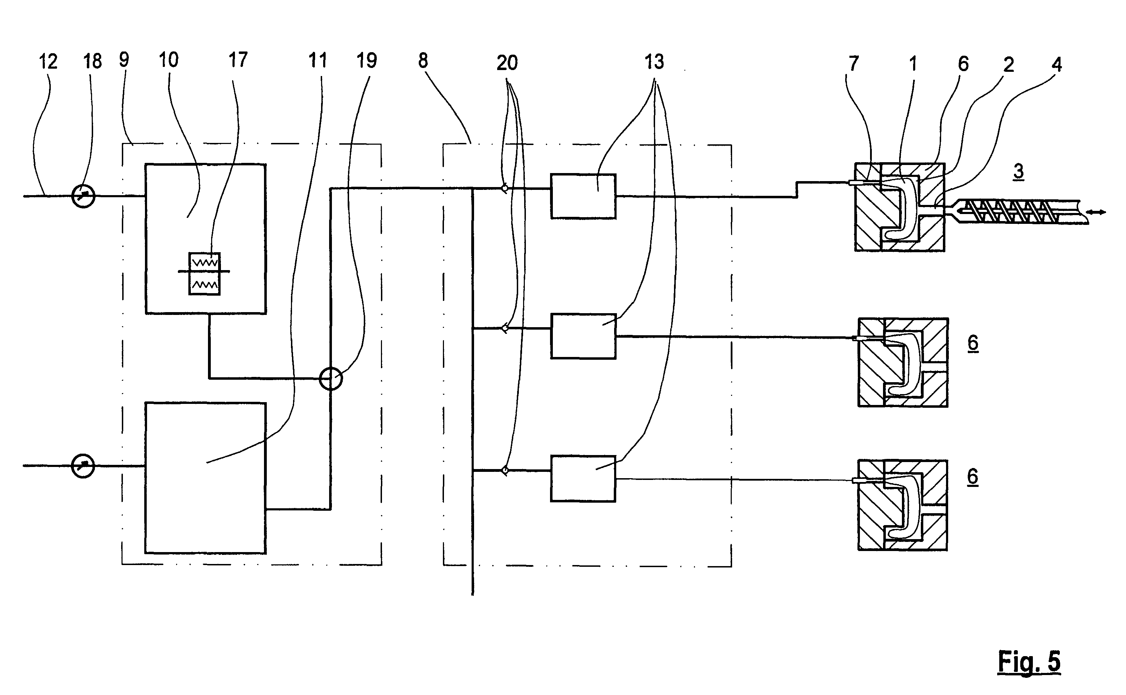

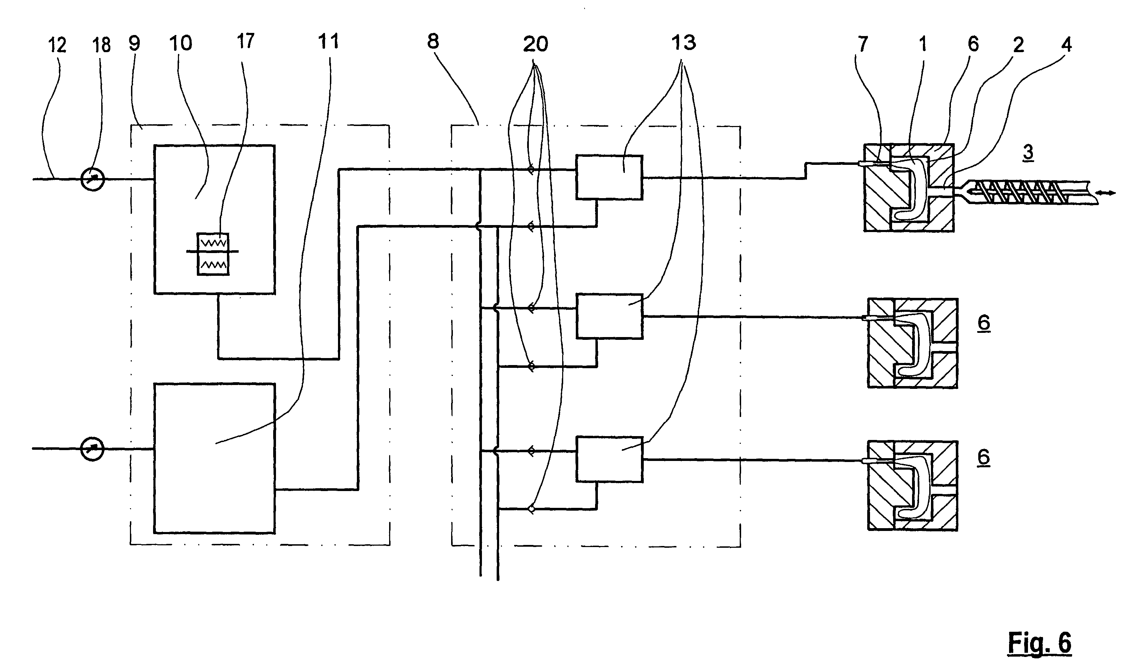

Eine weitere Alternative zeigt Figur 5. Hier besteht das erste Teilelement 9 aus zwei Reservoirs. Im ersten Reservoir 10 wird erwärmte Flüssigkeit und im zweiten Reservoir 11 kalte oder gekühlte Flüssigkeit bereitgestellt. Über die Mischarmatur 19 wird die gewünschte Temperatur der Flüssigkeit gemischt und an das zweite Teilelement 8 weitergeführt. Es ist aber auch denkbar, im zweiten Reservoir 11 ein Druckgas, vorzugsweise Stickstoff, bereitzustellen und ebenfalls über die Mischarmatur 19 zu mischen. Aber auch das Mischen der beiden Flüssigkeiten mit unterschiedlicher Temperatur erst im zweiten Teilelement 8 ist bei der erfindungsgemäßen Vorrichtung vorgesehen. Hierzu ist eine Ausgestaltung gemäß Figur 6 sinnvoll. Im ersten Teilelement 9 wird über ein erstes Reservoir 10 Flüssigkeit und über ein zweites Reservoir 11 Druckgas, vorzugsweise Stickstoff, oder Flüssigkeit mit einer Temperatur, die sich zur Temperatur der Flüssigkeit aus dem ersten Reservoir 10 unterscheidet, bereitgestellt. Beide Stränge werden über unterschiedliche Medienleitungen einem Druckregelungsmodul 13 im zweiten Teilelement 8 zugeführt. Im Druckregelungsmodul 13 können die beiden Medienleitungen gleichzeitig, nacheinander oder getrennt von einander freigegeben werden. Somit kann jede gewünschte Temperatur der einzugebenden Flüssigkeit gemischt werden, aber auch ein Gemisch aus Flüssigkeit und Gas erzeugt werden. Wird nach der Eingabe der Flüssigkeit der Druckgasstrang freigegeben, kann der Druck auf den Hohlraum 1 zusätzlich erhöht oder die Flüssigkeit mittels Druckgas wieder aus dem Hohlraum entfernt werden.

Alle Variationen der in den Figuren gezeigten Ausführungsbeispiele sind untereinander kombinierbar, so dass sich noch weitere Ausführungen der Vorrichtungen ergeben. So ist beispielsweise denkbar, im ersten Teilelement 9 drei Reservoirs bereitzustellen und somit eine Kombination der Ausführungen gemäß Figur 5 und 6 zu erhalten, also das Mischen von kalter, warmer Flüssigkeit und/oder Druckgas. Des weiteren ist in allen Variationen sichergestellt, dass der Druck in den Reservoirs 10, 11, 14 15 beispielsweise mittels einer Pumpe 18 erhöht werden kann, zwischen der Versorgungsleitung 12 und dem oder den Reservoirs 10, 11, 14 15 ist ein Mittel zur Druckerhöhung 18 eingesetzt.

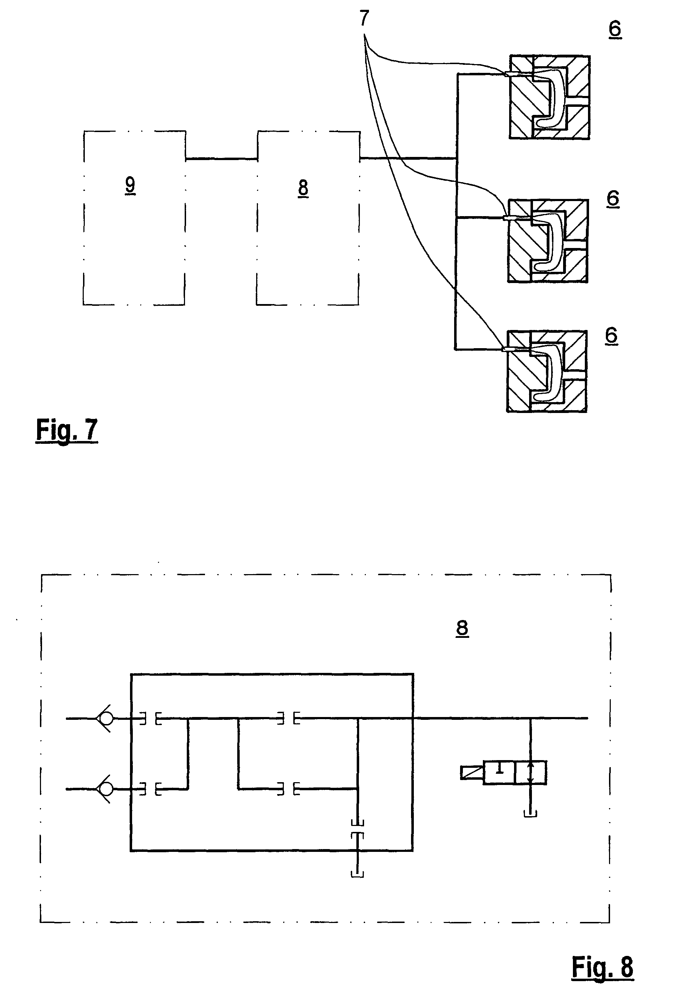

Die Verteilung nach dem zweiten Teilelement 8 an die zugeordneten Werkzeuge kann ebenfalls variabel gestaltet werden. Figur 7 zeigt ein Beispiel, bei der eine Mehrfachverteilung an drei Spritzgießwerkzeuge 6 von einem der Regelstränge aus dem zweiten Teilelement 8 realisiert ist.

Zwischen allen sich verzweigenden Mediensträngen sind Rückschlagventile 20 angeordnet, wie sie in allen Figuren dargestellt sind. Weiterhin können zur besseren Steuerung und Regelung in die einzelnen Medienleitungen Steuerungselement wie Ventile, Wegeventile oder weitere Rückschlagventile eingebaut werden. Eine beispielhafte Ausführungsform eines Druckregelungsmoduls 13 als Steuer/Regelventil ist in Figur 8 gezeigt.

Als besonders vorteilhafte Weiterbildung ist vorgesehen, das zweite Teilelement 8 je zugeordnetem Hohlraum 1 in einem Gehäuse unterzubringen und somit einen modularen Aufbau der Vorrichtung bereitzustellen.

### Bezugszeichenliste:

- 1: Hohlraum
- 2: Formteil
- 3: Mittel zum Einspritzen von Kunststoffschmelze
- 4: Schmelzefließweg
- 5: Kavität
- 6: Spritzgießwerkzeug
- 7: Fluideinspritzelement
- 8: zweites Teilelement
- 9: erstes Teilelement
- 10: erstes Reservoir
- 11: zweites Reservoir
- 12: Versorgungsleitung
- 13: Druckregelungseinrichtung
- 14: Flüssigkeitsspeicher
- 15: Kombinierter Flüssigkeits- Gasspeicher
- 16: Ringleitung
- 17: Temperierungsmittel
- 18: Pumpe
- 19: Mischarmatur
- 20: Rückschlagventil

## Patentansprüche

1. Vorrichtung zum Spritzgießen von mindestens einen Hohlraum (1) aufweisenden Formteilen (2) aus Kunststoffmaterial, die aufweist:
- Mittel (3) zum Einspritzen von Kunststoffschmelze entlang eines Schmelzefließweges (4) in die Kavität (5) einer Anzahl Spritzgießwerkzeuge (6) und
- Mittel (7, 8, 9) zum Einspritzen einer Flüssigkeit in das noch schmelzflüssige Kunststoffmaterial,
- wobei die Mittel (7, 8, 9) zum Einspritzen des Flüssigkeit ausgelegt sind, um eine Flüssigkeit mit vorgegebenem Druck und vorgegebener Menge einzuspritzen,
wobei die Mittel (7, 8, 9) zum Einspritzen der Flüssigkeit aus einem ersten Teilelement (9) bestehen, das Zentral und entfernt von den Spritzgießwerkzeugen (6) angeordnet ist und eine Anzahl Spritzgießwerkzeuge (6) zur Bildung des Hohlraums versorgt, und
aus einer Anzahl zweiter Teilelemente (8) bestehen, die zwischen dem ersten Teilelement (9) und den Spritzgießwerkzeugen (6) angeordnet sind, sowie einer Anzahl dritter Teilelemente (7), die jeweils an einem Spritzgießwerkzeug (6) angeordnet sind,
wobei das erste Teilelement (9) oder die zweiten Teilelemente (8) eine Versorgungsleitung (12) für die Flüssigkeit aufweisen die ein Mittel zur Druckerhöhung (18) versorgt,
wobei das Mittel zur Druckerhöhung (18) als Pumpe ein Reservoir (10, 11, 14, 15) mit der Flüssigkeit speist.

2. Vorrichtung nach Anspruch 1, wobei das erste Teilelement (9) mindestens ein Reservoir (10, 12) für Flüssigkeiten aufweist.

3. Vorrichtung nach Anspruch 1, wobei das erste Teilelement(9) eine Versorgungsleitung (12) für Flüssigkeit, vorzugsweise vom Wasserversorgungsbetrieb, ist.

4. Vorrichtung nach Anspruch 1, wobei das erste Teilelement (9) aus mindestens einem Reservoir (10, 11) für Flüssigkeit und einer Ringleitung (16) besteht.

5. Vorrichtung nach Anspruch 1, wobei das erste Teilelement (9) aus mindestens einem ersten Reservoir (10) für Flüssigkeit und einem zweiten Reservoir (11) für Druckgas, vorzugsweise Stickstoff, besteht.

6. Vorrichtung nach einem der Ansprüche 1 bis 5, wobei die zweiten Teilelemente (8) eine Einrichtung zur Steuerung und/oder Regelung des Flüssigkeitdruckes und die dritten Teilelemente (7) Fluideinspritzelemente (7) sind.

7. Vorrichtung nach Anspruch 6, wobei die zweiten Teilelemente (8) aus mindestens einem Druckregelmodul (13) bestehen.

8. Vorrichtung nach Anspruch 7, wobei die zweiten Teilelemente (8) Einrichtungen zur Steuerung und/oder Regelung des Flüssigkeitdruckes sind, die aus einem Druckregelmodul (13) und einem Flüssigkeitsspeicher (14) bestehen.

9. Vorrichtung nach Anspruch 7, wobei die zweiten Teilelemente (8) Einrichtungen zur Steuerung und/oder Regelung des Flüssigkeitdruckes sind, die aus einem Druckregelmodul (13) und einem kombinierten Flüssigkeits- / Gasspeicher (15) bestehen.

10. Vorrichtung nach Anspruch 8 oder 9, wobei den Einrichtungen zur Steuerung und/oder Regelung des Fluiddruckes eine Pumpe (18) vorgeschaltet ist, um den Druck zu erhöhen.

11. Vorrichtung nach einem der vorigen Ansprüche, wobei das erste Teilelement (9) und/oder die zweiten Teilelemente (8) Temperierungsmittel (17) aufweisen, mit denen die Flüssigkeit auf eine gewünschte Temperatur gebracht werden kann.

12. Vorrichtung nach Anspruch 11, wobei zwischen mindestens zwei Flüssigkeitsreservoirs (10, 11) und dem jeweiligen Spritzgießwerkzeug (6) mindestens eine Mischarmatur (19) angeordnet ist, mit der die in das Spritzgießwerkzeug einzuspritzende Flüssigkeit auf eine gewünschte Temperatur gemischt wird.

13. Verfahren zum Spritzgießen von mindestens einen Hohlraum (1) aufweisenden Formteilen (2) aus Kunststoffmaterial, das die Vorrichtung gemäß den Ansprüchen 1-12 verwendet und die folgenden Schritte aufweist:
a) Einspritzen von Kunststoffschmelze von einer Einspritzeinheit (3) entlang eines Schmelzefließweges (4) in die Kavität (5) einer Anzahl Spritzgießwerkzeuge (6);
b) Einspritzen einer Flüssigkeit in das noch schmelzflüssige Kunststoffmaterial, so dass dieses an die Wandungen der Kavität (5) gepreßt wird;
c) Verfestigenlassen des Kunststoffmaterials, bis dieses selbsttragend das Formteil (2) bildet;
d) Entformen des Formteils (2) aus der Kavität (5) des Spritzgießwerkzeugs (6);
wobei als Flüssigkeit eine Flüssigkeit eingesetzt wird, die mit vorgegebenem Druck und vorgegebener Menge eingespritzt wird,
wobei die Flüssigkeit von einem ersten Teilelement (9) der Mittel zum Einspritzen der Flüssigkeit, das zentral und entfernt von den Spritzgießwerkzeugen (6) angeordnet ist und eine Anzahl Spritzgießwerkzeuge (6) versorgt,
über eine Anzahl zweiter Teilelemente (8) der Mittel zum Einspritzen der Flüssigkeit, die zwischen dem ersten Teilelement (9) und den Spritzgießwerkzeugen (6) angeordnet sind,
zu einer Anzahl dritter Teilelemente (7) der Mittel zum Einspritzen der Flüssigkeit, die jeweils an einem Spritzgießwerkzeug (6) angeordnet sind, geleitet wird und
von diesen in die Kunststoffschmelze eingespritzt wird, wobei des erste wobei das erste Teilelement (9) oder die zweiten Teilelemente (8) eine Versorgungsleitung (12) für die Flüssigkeit aufweisen, die ein Mittel zur Druckerhöhung (18) versorgt, wobei das Mittel zur Durckerhöhung (18) als Pumpe ein Reservoir (10, 11, 14, 15) mit Flüssigkeit speist.

## Claims

1. Device for injection-moulding of moulded parts (2) made from plastic material having at least one cavity (1), which has:
- means (3) for injecting plastic melt along a melt flow path (4) into the cavity (5) of a number of injection-moulding dies (6) and
- means (7, 8, 9) for injecting a liquid into the still molten plastic material,
- wherein the means (7, 8, 9) for injecting the liquid are designed in order to inject a liquid at preset pressure and preset quantity,
- wherein the means (7, 8, 9) for injecting the liquid consist of a first part element (9), which is arranged centrally and remotely from the injection-moulding dies (6) and supplies a number of injection-moulding dies (6) for forming the cavity, and
consist of a number of second part elements (8) which are arranged between the first part element (9) and the injection-moulding dies (6), as well as a number of third part elements (7), which are arranged in each case on an injection-moulding die (6),
wherein the first part element (9) or the second part elements (8) have a supply line (12) for the liquid, which supplies a means for increasing pressure (18),
wherein the means for increasing pressure (18) as a pump feeds a reservoir (10, 11, 14, 15) with the liquid.

2. Device according to claim 1, wherein the first part element (9) has at least one reservoir (10, 12) for liquids.

3. Device according to claim 1, wherein the first part element (9) is a supply line (12) for liquid, preferably from the water-supply plant.

4. Device according to claim 1, wherein the first part element (9) consists of at least one reservoir (10, 11) for liquid and a ring conduit (16).

5. Device according to claim 1, wherein the first part element (9) consists of at least one first reservoir (10) for liquid and a second reservoir (11) for compressed gas, preferably nitrogen.

6. Device according to one of claims 1 to 5, wherein the second part elements (8) are a device for the control and/or regulation of the liquid pressure and the third part elements (7) are fluid-injection elements (7).

7. Device according to claim 6, wherein the second part elements (8) consist of at least one pressure-regulating module (13).

8. Device according to claim 7, wherein the second part elements (8) are devices for the control and/or regulation of the liquid pressure which consist of a pressure-regulating module (13) and a liquid store (14).

9. Device according to claim 7, wherein the second part elements (8) are devices for the control and/or regulation of the liquid pressure which consist of a pressure-regulating module (13) and a combined liquid/gas store (15).

10. Device according to claim 8 or 9, wherein a pump (18) is connected upstream of the devices for the control and/or regulation of the fluid pressure in order to increase the pressure.

11. Device according to one of the preceding claims, wherein the first part element (9) and/or the second part elements (8) have tempering means (17), with which the liquid may be brought to the required temperature.

12. Device according to claim 11, wherein at least one mixing fitting (19), with which the liquid to be injected into the injection-moulding die is mixed to a required temperature, is arranged between at least two liquid reservoirs (10, 11) and the particular injection-moulding die (6).

13. Process for injection-moulding of moulded parts (2) made from plastic material having at least one cavity (1), which uses the device according to claims 1 - 12 and has the following steps:
a) injection of plastic melt from an injection unit (3) along a melt flow path (4) into the cavity (5) of a number of injection-moulding dies (6);
b) injection of a liquid into the still molten plastic material, so that the latter is pressed against the walls of the cavity (5);
c) allowing the plastic material to solidify until the latter forms the moulded part (2) in self-supporting manner;
d) removing the moulded part (2) from the cavity (5) of the injection-moulding die (6);
wherein a liquid, which is injected at preset pressure and preset quantity, is used as the liquid,
wherein the liquid is conducted from a first part element (9) of the means for injecting the liquid, which is arranged centrally and remotely from the injection-moulding dies (6) and supplies a number of injection-moulding dies (6),
via a number of second part elements (8) of the means for injecting the liquid, which are arranged between the first part element (9) and the injection-moulding dies (6),
to a number of third part elements (7) of the means for injecting the liquid, which are arranged in each case on an injection-moulding die (6) and
is injected by the latter into the plastic melt, wherein the first part element (9) or the second part elements (8) have a supply line (12) for the liquid, which supplies a means for increasing pressure (18), wherein the means for increasing pressure (18) as a pump feeds a reservoir (10, 11, 14, 15) with liquid.

## Revendications

1. Dispositif de moulage par injection de pièces (2) en matière plastique présentant au moins un creux (1), qui présente :
des moyens (3) d'injection de plastique fondu dans la cavité (5) d'un certain nombre de moules d'injection (6) le long d'une voie d'écoulement de matière fondue (4) et
des moyens (7, 8, 9) d'injection d'un liquide dans la matière plastique encore fondue,
les moyens (7, 8, 9) d'injection du liquide étant conçus pour injecter un liquide à une pression fixée et en quantité fixée,
les moyens (7, 8, 9) d'injection du liquide étant constitués d'un premier élément partiel (9) qui est placé au centre à distance des moules d'injection (6) et alimente un certain nombre de moules d'injection (6) pour la formation du creux,
d'un certain nombre de deuxièmes éléments partiels (8) qui sont placés entre le premier élément partiel (9) et les moules d'injection (6), et d'un certain nombre de troisièmes éléments partiels (7) qui sont placés chacun sur un moule d'injection (6),
le premier élément partiel (9) ou les deuxièmes éléments partiels (8) présentant une conduite d'alimentation (12) pour le liquide qui alimente un moyen d'augmentation de pression (18),
le moyen d'augmentation de pression (18), constitué d'une pompe, alimentant un réservoir (10, 11, 14, 15) en liquide.

2. Dispositif selon la revendication 1, dans lequel le premier élément partiel (9) présente au moins un réservoir (10, 12) pour des liquides.

3. Dispositif selon la revendication 1, dans lequel le premier élément partiel (9) est une conduite d'alimentation (12) pour liquide, de préférence du service public de distribution d'eau.

4. Dispositif selon la revendication 1, dans lequel le premier élément partiel (9) est constitué d'au moins un réservoir (10, 11) pour liquide et d'une conduite circulaire (16).

5. Dispositif selon la revendication 1, dans lequel le premier élément partiel (9) est constitué d'au moins un premier réservoir (10) pour liquide et un deuxième réservoir (11) pour gaz sous pression, de préférence azote.

6. Dispositif selon l'une des revendications 1 à 5, dans lequel les deuxièmes éléments partiels (8) sont un dispositif de commande et/ou régulation de la pression du liquide et les troisièmes éléments partiels (7) sont des éléments d'injection de fluide (7).

7. Dispositif selon la revendication 6, dans lequel les deuxièmes éléments partiels (8) sont constitués d'au moins un module de régulation de pression (13).

8. Dispositif selon la revendication 7, dans lequel les deuxièmes éléments partiels (8) sont des dispositifs de commande et/ou régulation de la pression du liquide qui sont constitués d'un module de régulation de pression (13) et d'un accumulateur de liquide (14).

9. Dispositif selon la revendication 7, dans lequel les deuxièmes éléments partiels (8) sont des dispositifs de commande et/ou régulation de la pression du liquide qui sont constitués d'un module de régulation de pression (13) d'un accumulateur combiné de liquide et de gaz (15).

10. Dispositif selon l'une des revendications 8 et 9, dans lequel une pompe (18) destinée à augmenter la pression est montée en amont des dispositifs de commande et/ou régulation de la pression du fluide.

11. Dispositif selon l'une des revendications précédentes, dans lequel le premier élément partiel (9) et/ou les deuxièmes éléments partiels (8) présentent des moyens de réglage de température (17) qui permettent de porter le liquide à une température désirée.

12. Dispositif selon la revendication 11, dans lequel est placée entre au moins deux réservoirs de liquide (10, 11) et le moule d'injection respectif (6) au moins une robinetterie mélangeuse (19) qui permet de mélanger le liquide à injecter dans le moule d'injection pour le porter à une température désirée.

13. Procédé de moulage par injection de pièces (2) en matière plastique présentant au moins un creux (1), qui utilise le dispositif selon les revendications 1 à 12 et présente les étapes suivantes :
a) injection de plastique fondu dans la cavité (5) d'un certain nombre de moules d'injection (6) par un dispositif d'injection (3) le long d'une voie d'écoulement de matière fondue (4),
b) injection d'un liquide dans la matière plastique encore fondue, de sorte que celle-ci est pressée contre les parois de la cavité (5),
c) solidification de la matière plastique jusqu'à ce que celle-ci forme, autoportante, la pièce moulée (2),
d) démoulage de la pièce moulée (2) de la cavité (5) du moule d'injection (6),
dans lequel est employé comme liquide un liquide qui est injecté à une pression fixée et en quantité fixée,
dans lequel le liquide est conduit, d'un premier élément partiel (9) des moyens d'injection du liquide qui est placé au centre à distance des moules d'injection (6) et alimente un certain nombre de moules d'injection (6),
par l'intermédiaire d'un certain nombre de deuxièmes éléments partiels (8) des moyens d'injection du liquide qui sont placés entre le premier élément partiel (9) et les moules d'injection (6),
à un certain nombre de troisièmes éléments partiels (7) des moyens d'injection du liquide qui sont placés chacun sur un moule d'injection (6), et, de ceux-ci, est injecté dans le plastique fondu,
le premier élément partiel (9) ou les deuxièmes éléments partiels (8) présentant une conduite d'alimentation (12) pour le liquide qui alimente un moyen d'augmentation de pression (18), ce moyen d'augmentation de pression (18), constitué d'une pompe, alimentant en liquide un réservoir (10, 11, 14, 15).
